# EUROPEAN PATENT SPECIFICATION

(11) **EP 2 607 690 B1**
(45) Date of publication and mention of the grant of the patent: **14.06.2017**
(21) Application number: 11195353.5
(22) Date of filing: 22.12.2011
(51) Int. Cl.: F03D 7/04, G05B 15/02

(54) **Control system for a wind park**
Steuerungssystem für einen Windpark
Système de commande de parc éolien

(43) Date of publication of application: 26.06.2013
(73) Proprietor: Siemens Aktiengesellschaft, 80333 München (DE)
(72) Inventor: Hansen, Ulrich Vestergaard B., 7400 Herning (DK); Kulkarni, Vivek, 82008 Unterhaching (DE); Hoejgaard, Jannik, 7330 Brande (DK)

(56) References cited:
- EP-A1- 1 519 040
- EP-A2- 2 341 246
- WO-A1-2009/042581
- WO-A1-2011/150929
- DE-A1-102005 018 996
- US-A1- 2009 204 266
- ETO H ET AL: "Network of plant remote monitoring system using WEB for windfarms", INTELEC 2003. 25TH. INTERNATIONAL TELECOMMUNICATIONS ENERGY CONFERENCE. YOKOHAMA, JAPAN, OCT. 19 - 23, 2003; [INTELEC. INTERNATIONAL TELECOMMUNICATIONS ENERGY CONFERENCE], TOKYO, IEICE, JP, vol. CONF. 25, 19 October 2003 (2003-10-19), pages 857-863, XP010675337, ISBN: 978-4-88552-196-6

## Description

The invention describes a control system for a wind park, a remote computing environment, a wind turbine, a wind park, and a method of controlling a wind park.

Wind parks comprising many wind turbines are becoming more widespread, particularly in offshore or remote mainland locations. A prior art wind turbine has various hardware-based components to control and operate the wind turbine. For example, a wind turbine usually comprises a wind turbine controller, an interface computer, and measurement system, etc. These can be realised using industrial grade PCs. If a new functionality is required, it may be necessary to install new hardware in the wind turbine, or in a substation located in the wind park. For example, to serve a certain purpose, it may be required to install a further industrial grade PC in the wind turbine and to connect it in some way to the existing hardware, or at least to an interface so that this new functionality can be controlled by a supervisory controller in, for example, a substation or a control room facility of the wind park.

Relatively high costs are associated with prior art wind parks, particularly offshore wind parks. It is difficult as well as expensive to carry out hardware upgrades or replacements for components located in a wind turbine, since maintenance and troubleshooting require expensive physical presence in a wind turbine. The mean time to repair and mean time to recover are therefore relatively high. These costs add to the overall cost of running a wind park. There are many examples of wind parks that have the wind turbine control functionality realised as hardware in the wind turbines themselves, e.g. US 2009/204266 A1 and EP 2 341 246 A2.

It is therefore an object of the invention to provide a more economic and more practical way of controlling a wind park.

This object is achieved by the control system of claim 1; by the remote computing environment of claim 10; by the wind turbine of claim 11; by the wind park of claim 14; and by the method of claim 15 controlling a wind park.

According to the invention, the control system for a wind park - comprising a number of wind turbines for generating electrical power and a substation for feeding the electrical power into a grid - comprises a remote computing environment that is realised at a location remote from the wind park and comprises a virtual environment for each wind turbine of the wind park for complete control functionality of the wind turbines, and a virtual supervisory controller for interacting with a virtual environment of a wind turbine. The control system further comprises at least one communication means for communication between an operator at a remote location and a wind turbine of the wind park by means of the virtual supervisory controller and the virtual wind turbine environments.

The term "remote" used in the context of the computing environment relative to the wind park is to be understood to mean that the computing environment is physically hosted or realised at a location removed from the wind park, so that a physical presence of computing environment entities is not needed in the wind turbine or in a substation, and any communication between the computing environment and the wind park is effected in a wired or wireless manner over that distance. The control system according to the invention is realised or physically hosted at a location remote also from the substation of the wind park. This means that certain end devices such as wind turbine interface computers or supervisory controllers are no longer required as physical end devices in the wind turbines or substation. An advantage of the control system according to the invention is that the degree of manual intervention required to keep the wind park operational can be effectively reduced. Furthermore, the occurrences of device failure can also be reduced, since various end devices are no longer physically present in the wind turbines, and their functionality is instead realized in the remote computing environment. The control system according to the invention makes use of developments in the field of remote operations to overcome barriers that have resulted in wind parks being regarded as "closed entities" with very few or no interfaces to the outside world. A significant advantage of the control system according to the invention is in the decreased operating and installation costs, since devices that would otherwise be required for control functionality of the wind turbines of the wind park are realized instead in a remote computing environment.

According to the invention, the remote computing environment for controlling a remote wind park from a location remote from the wind park comprises essentially complete control functionality for one or more wind turbines of the wind park.

According to the invention, the wind turbine for use in a wind park controlled by such a control system has its essentially complete control functionality realised in a remote computing environment of the control system, so that the wind turbine need only comprise a communication means for receiving control signals from the remote computing environment for controlling components of the wind turbine.

Since essentially all of the control functionality of the wind turbine is 'outsourced' to the remote computing environment of the control system, the functionality of several end devices is realized not by physical entities in the wind turbine itself, but in the remote computing environment of the control system. This has the advantage of there being fewer devices in the wind turbine that need initial configuration, so that it is not necessary for technicians to physically visit a wind turbine to carry out such a configuration step.

According to the invention, the wind park comprises such a control system and at least one such wind turbine, preferably a plurality of such wind turbines.

Such a wind farm advantageously requires less configuration of hardware components compared to a prior art wind park, since the wind park according to the invention requires less end devices to be physically present in the wind turbines. Instead, the functionality of such end devices is realized in the remote computing environment of the control system.

According to the invention, the method for controlling a wind park comprises providing a virtual environment for wind turbines of the wind park in a remote computing environment, which remote computing environment is realised at a location remote from the wind park; providing a virtual supervisory controller for interacting with a virtual environment of a wind turbine; monitoring the performance of the wind turbines in the remote computing environment; and generating control signals for the wind turbines in the remote computing environment, whereby the performance monitoring and control signal generation steps are carried out by an operator at a remote location by means of the virtual supervisory controller and the virtual environments of the wind turbines.

Maintenance costs of a wind park according to the invention can be considerably reduced since the control system can be managed remotely, for example by a remote operator. Furthermore, it is easier and relatively inexpensive to upgrade hardware for future requirements, since only one system needs to be upgraded, i.e. the system upon which the remote computing environment is realised. In a wind turbine according to the invention, there are less end-devices that need to be configured. Also, the mean time to recovery in case of a fault can be reduced since fault recovery is less likely to require physical access to a wind turbine or to a substation of the wind park.

Particularly advantageous embodiments and features of the invention are given by the dependent claims, as revealed in the following description. Features of different claim categories may be combined as appropriate to give further embodiments not described herein.

The control system according to the invention is particularly suited to the control of an offshore wind park, since such a wind park can comprise many wind turbines, and is generally difficult to access, particularly in poor weather conditions. Therefore, in the following but without restricting the invention in any way, it may be assumed that a wind park comprises an offshore wind park, and that the remote computing environment is realised at one or more mainland locations.

Various communications standards have been developed for communication over a network. In a particularly preferred embodiment of the invention, a communication means comprises an internet protocol based communication channel between the remote control centre and a remote computing environment and/or between a remote computing environment and a wind turbine of a wind park and/or between a remote computing environment and a substation of a wind park. The communications means preferably comprises a redundant fibre-optical infrastructure, so that the communications means avails of an alternative path in case of failure, for example an alternative path to the nearest Internet access point. Preferably, the communications means comprises a passive fibre-optical infrastructure, so that an additional power source is not required by the fibre-optical infrastructure. Preferably, the communications means comprises a redundant and active network infrastructure, with active components as part of the networking infrastructure.

A wind park can comprise any number of wind turbines, for example only a few, or very many. In a preferred embodiment of the invention, a virtual environment for a wind turbine represents functional elements of a wind turbine. In the following, the term "virtual environment" is to be understood to mean that any functional element or elements represented by the virtual environment are not necessarily present as physical instances. Instead, any functions of those functional elements can be carried out by means of software programs running on one or more other physical instances not located in the wind turbines themselves.

Usually, a wind turbine comprises a wind turbine controller, which in a prior art wind turbine controlled by a prior art control system is realised as one or more computers such as industrial PCs physically located in the wind turbine. This hardware is connected by means of a suitable interface computer to the outside world, and converts input from the outside world into control signals for any components that should be controlled - for example the generator (to adjust the output voltage or output power of the wind turbine), a blade pitch controller (to adjust the pitch angle of the rotor blades), a yaw controller (to adjust the yaw angle of the nacelle), a cooling system (to increase or decrease the cooling), etc. A prior art wind turbine generally also comprises a measurement system, for example a device or computer for collecting information from sensors such as vibration sensors, temperature sensors, etc. A prior art wind turbine can also comprise other devices or computers that perform further "add-on" functions. Therefore, in a particularly preferred embodiment of the invention, a virtual environment of a wind turbine comprises one or more of a virtual turbine interface computer, a virtual wind turbine controller, a virtual measurement system, and a virtual add-on functional module. In this way, the virtual environment for a wind turbine can perform the same functions as the physical devices that would otherwise be located in the wind turbine itself if it were to be controlled using a prior art control system. Functions of these virtualized components can therefore be computed on shared hardware resources that are physically removed from the wind turbine itself. An advantage of this embodiment is that the number of visits to a wind turbine for maintenance purposes can be considerably reduced. Furthermore, control cabinets of a wind turbine can be made smaller since they do not need to accommodate as many bulky hardware components, since the functionality of most hardware can be realised in a remote computing environment.

Usually, a substation for a prior art wind park comprises a supervisory control and data acquisition (SCADA) module, usually realised as a computer physically located in the substation for distributing control signals to the wind turbines of the wind park and for collecting information from the wind turbines, for example from the measurement systems of the wind turbines. Therefore, in a particularly preferred embodiment of the invention the remote computing environment comprises a virtual supervisory controller for interacting with a virtual environment of a wind turbine. This particularly advantageous embodiment of the invention means that essentially all the configuration- and maintenance-intensive hardware of a control system for a wind park can be favourably realised in a virtual manner.

An advantage of these embodiments is that commissioning can be carried out faster and more easily, since the wind turbine control system and the supervisory control system can be configured remotely, for example by a remote or "cloud" operator, even before a turbine is installed and energised. It is then conceivable that a wind park can be controlled by an operator located on the other side of the globe. Furthermore, the overall control system is less dependent on specific versions of hardware, since many functions can be realized as virtual, i.e. software instances. This makes it easier to carry out changes to the system involving modifications to the functionality of every wind turbine of the wind park, since these changes can be carried out collectively in the remote computing environment. Furthermore, it is relatively easy to make a virtualised control system redundant, i.e. to make a duplicate that can take over in case of failure. Also, security of the remote computing environment is relatively easy to establish since it is more straightforward and less risky to manage security-related updates in a virtualised environment. It is also relatively easy to revert back to a previously working configuration should the need arise.

The functionality of the wind turbines and the substation can be realised as a single instance in the remote computing environment. However, this might be complex to realise. Therefore, in a further preferred embodiment of the invention, the control system comprises a plurality of virtual instances (software module for virtual supervisory controller, virtual turbine interface computer, virtual measurement system), which virtual instances are distributed over a plurality of physical locations. Such a distributed system is generally referred to as a "cloud".

The remote computing environment could be physically hosted in proximity to a control centre. An operator - human or automated - can access the remote computing environment as necessary to control the wind park or to monitor its performance. However, it may not always be practical for the operator to be in the same location as the remote computing environment. Therefore, in a further preferred embodiment of the invention, the control centre comprises a remote control centre, realised to interact with the remote computing environment. In other words, the remote computing environment is remote from the wind park, and the remote control centre is remote from both the wind park and the remote computing environment. This allows a handover from one operator (for example a first owner of the wind park) to a second operator (for example a second owner of the wind park).

A wind park according to the invention may be associated with its own control system. However, an operator of more than one wind park may prefer to manage those wind parks in a more efficient manner. Therefore, in a preferred embodiment of the invention, the control system comprises a plurality of remote computing environments, wherein each remote computing environment is allocated to a distinct wind park. An operator can therefore manage each of those wind parks using a single control system. Preferably, the remote control centre is realised to interact with each remote computing environment, so that the operator, in the remote control centre of the control system, can use a single interface such as a graphical user interface to manage all of the wind parks.

In the remote control centre, the operator can interact with the control system to cause control signals for one or more of the wind turbines to be dispatched. Such a control signal for controlling a component of the wind turbine can comprise a control signal for controlling any of a generator (voltage, power factor, reactive power reference); a blade pitching arrangement; a yaw control arrangement; a cooling arrangement; a lubrication arrangement, etc., whereby this list is by no means exhaustive.

A wind turbine usually comprises a number of measurement units for collecting measurement data, for example data from vibration sensors to detect faults, from oil sensors of a lubrication system to determine a lubrication status, etc. Measurement systems for a prior art wind turbine are usually realised to interact with an industrial-PC, which is usually equipped with a number of suitable analog interfaces for receiving analog measurement signals and converting them to a computer-readable form. A wind turbine according to the invention therefore preferably comprises a number of measurement units, wherein a measurement unit is realised to directly transmit measurement data to the remote computing environment of the control system. To this end, a measurement unit is preferably "IP-aware", i.e. it can communicate with certain other remote units such as the remote computing environment using a protocol such as the IP protocol. In order to be able to use non-IP-aware measurement devices if none are available, a wind turbine according to the invention might comprise a suitable converter for converting measurement signals originating from such a device into a suitable form for transmitting to the remote computing environment over the communications interface of the wind turbine.

The virtual instance of the measurement system is used to monitor operating conditions in the wind turbine, using information collected from the measurement devices of the turbine, in order to decide on any corrective action that might need to be taken to ensure satisfactory and trouble-free operation of the turbine. To this end, the virtual instance of the measurement system in the virtual environment of that wind turbine is realised to communicate with the virtual instance of the wind turbine interface computer, at least during a configuration step of the remote computing environment, and is realised to communicate directly with the physical sensors of the wind turbine.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig. 1 shows a prior art control system for a wind park;
Fig. 2 shows a control system 1 according to a first embodiment of the invention;
Fig. 3 shows a control system 1 according to a second embodiment of the invention.

In the diagrams, like numbers refer to like objects throughout. Objects in the diagrams are not necessarily drawn to scale.

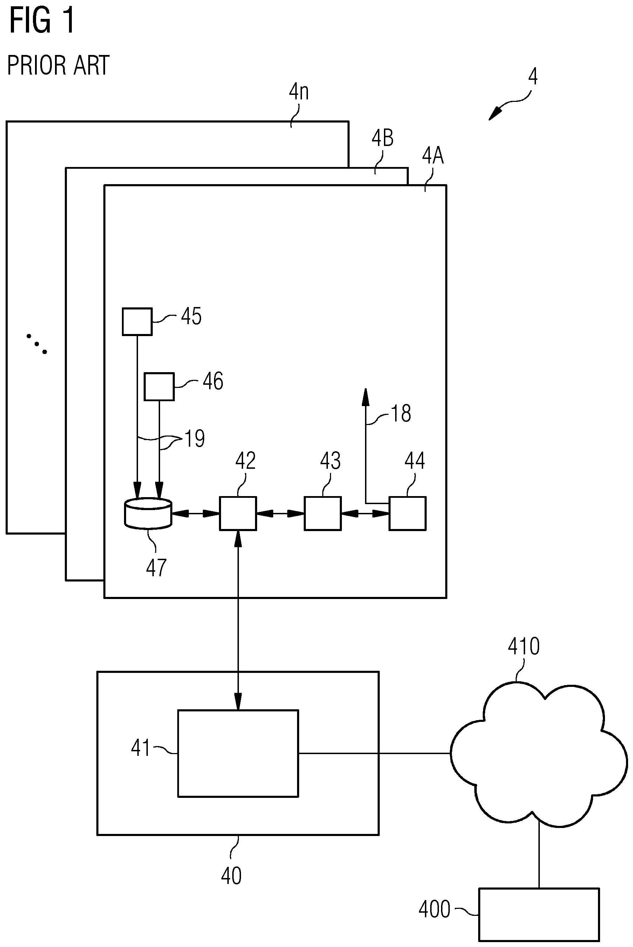

Fig. 1 shows a prior art control system for a wind park comprising a plurality of wind turbines 4A, 4B, ..., 4n. The wind turbines 4A, 4B, ..., 4n are controlled directly from a substation 40, which comprises a supervisory controller 41 for collecting information from and issuing commands to the individual wind turbines 4A, 4B, ..., 4n. Commands intended for a wind turbine 4A, 4B, ..., 4n are received by an interface computer 43 and processed before being forwarded to a wind turbine controller 44. Each wind turbine 4A, 4B, ..., 4n comprises such an interface computer 43. Each wind turbine 4A, 4B, ..., 4n can also comprises a number of sensors 45, 46 for collecting measurement data 19 used by the supervisory controller 41. The substation 40 in turn can be controlled from a remote location, for example from a remote control centre 400. Data can be exchanged between the substation 40 and the remote control centre 400 over the internet 410 or by means of some other suitable communication channel. In this prior art system, any maintenance required by the wind turbine interface computer 43 or by other hardware 47 such as a measurement system 47 must be carried out physically in the wind turbine 4A, 4B, ..., 4n, which can add considerably to the cost of running a wind park, particularly an offshore wind park.

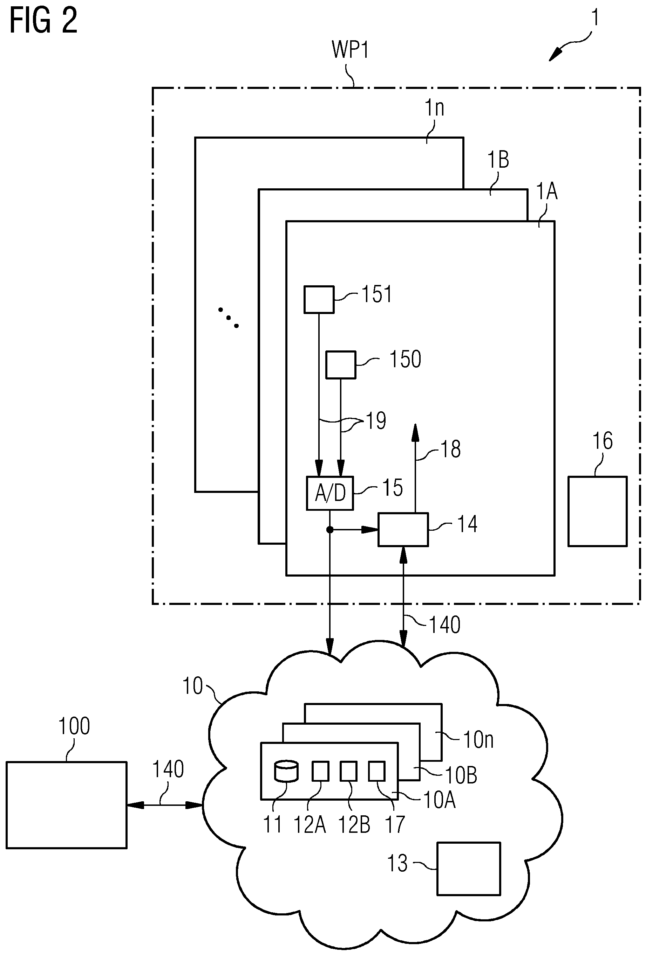

Fig. 2 shows a control system 1 according to a first embodiment of the invention. Here, a plurality of wind turbines 1A, 1B, ..., 1n are arranged in a wind park WP1 for generating electrical power, together with a substation for feeding the electrical power into a grid. A wind turbine 1A, 1B, ..., 1n of the wind park WP1 need only comprise sensors 150, 151 for collecting measurement data. The collected measurement data can be converted from analog to digital if required, using an A/D converter 15. The data can then be transmitted directly in a wireless manner, for example using the internet protocol IP, or over a switch 14 for added redundancy, to a cloud configuration 10 for that wind park WP1. A remote control centre 100 is used for controlling the wind turbines 1A, 1B, ..., 1n of the wind park WP1 in a remote manner. Each wind turbine 1A, 1B, ..., 1n is virtualized i.e. is represented by its own virtual environment 10A, 10B, ..., 10n respectively. A virtual environment 10A, 10B, ..., 10n for a wind turbine comprises software instances 11, 12A, 12B for that wind turbine, in this case a virtualized measurement system 11, a virtualized turbine interface computer 12A, and a virtualized wind turbine controller 12B. A virtual environment 10A, 10B, ..., 10n for a wind turbine can also comprise one or more software instances of virtual add-on functional modules 17, as shown here. The cloud 10 also comprises a software instance 13 of a supervisory controller. The virtualized supervisory controller 13 can communicate with the virtualized measurement system 11, turbine interface computer 12A and wind turbine controller 12B of each virtual environment 10A, 10B, ..., 10n. The remote control centre 100 can "log into" the cloud 10 and can control any of the wind turbines 1A, 1B, ..., 1n by means of the virtualized supervisory controller 13 and the appropriate virtual environment 10A, 10B, ... 10n. For example, the remote control centre 100 can log into the cloud 10 and can interact with the virtualized supervisory controller 13 to obtain measurement data for wind turbine 1A by reading data delivered by the virtualized measurement system 11 of the virtual environment 10A, and to issue control commands to wind turbine 1A via the virtualized turbine interface computer 12A and virtualized turbine controller 12B.

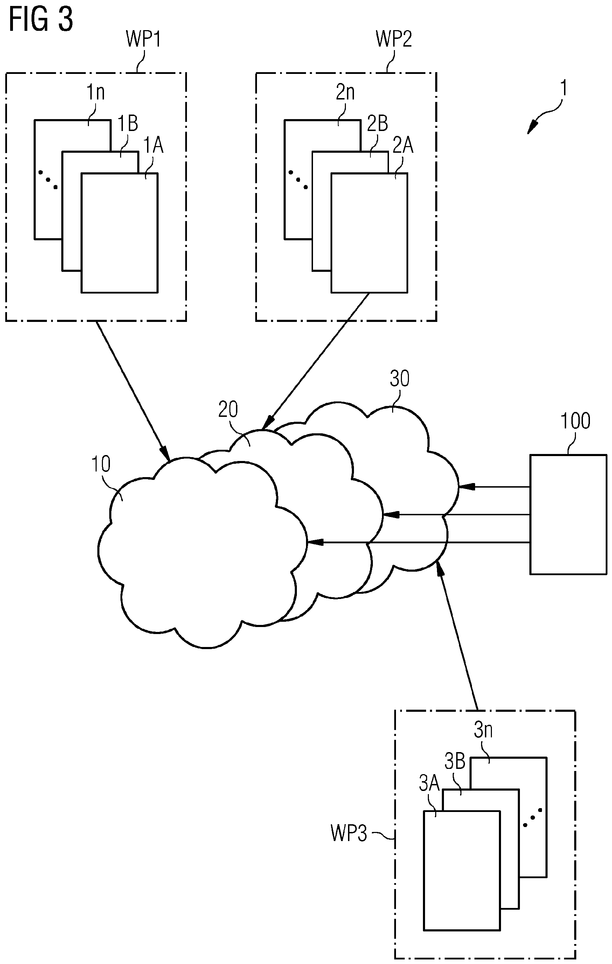

Fig. 3 shows a control system 1 according to a second embodiment of the invention. Here, a plurality of wind turbines 1A, 1B, ... 1n is arranged in a first wind park WP1; a plurality of wind turbines 2A, 2B, ... 2n is arranged in a second wind park WP2; and a plurality of wind turbines 3A, 3B, ... 3n is arranged in a third wind park WP3. Each wind park WP1, WP2, WP3 has its own cloud 10, 20, 30. Each cloud 10, 20, 30 has a virtual environment for each wind turbine of that wind park WP1, WP2, WP3, as described in Fig. 2 above. The remote control centre 100 can "log into" any cloud 10, 20, 30 and can control any of the wind turbines of the corresponding wind park WP1, WP2, WP3 by means of the virtualized supervisory controller of that cloud and the appropriate virtual environment. Of course, the number of wind parks controllable in this manner is essentially unlimited, and is not limited to just three wind parks WP1, WP2, WP3 as shown here.

Although the present invention has been disclosed in the form of preferred embodiments and variations thereon, it will be understood that numerous additional modifications and variations could be made thereto without departing from the scope of the invention. For example, a virtualization of the wind turbine interface computer may be sufficient, and the wind turbine controller may be left as a physical hardware instance in the wind turbine. In such an embodiment, the virtual environment of a wind turbine would then only comprise a software instance for a wind turbine interface computer, as well as any other software instances for a measurement system, etc.

For the sake of clarity, it is to be understood that the use of "a" or "an" throughout this application does not exclude a plurality, and "comprising" does not exclude other steps or elements. The mention of a "unit" or a "module" does not preclude the use of more than one unit or module.

## Claims

1. A control system (1) for a wind park (WP1, WP2, WP3), wherein the wind park (WP1, WP2, WP3) comprises a number of wind turbines (1A, ..., 3n) for generating electrical power and a substation (16) for feeding the electrical power into a grid, which control system (1) comprises
- a remote computing environment (10, 20, 30), which remote computing environment (10, 20, 30) is realised at a location remote from the wind park (WP1, WP2, WP3) and comprises a virtual environment (10A, 10B, ..., 10n) for each wind turbine (1A, ..., 3n) of the wind park (WP1, WP2, WP3) for complete control functionality of the wind turbines (1A, ..., 3n), and a virtual supervisory controller (13) for interacting with a virtual environment (10A, 10B, ..., 10n) of a wind turbine (1A, ..., 3n); and
- a communication means (14, 140) for communication between an operator at a remote location and a wind turbine (1A, ..., 3n) of the wind park (WP1, WP2, WP3) by means of the virtual supervisory controller (13) and the virtual environments (10A, 10B, ..., 10n) of the wind turbines (1A, ..., 3n).

2. A control system according to claim 1, wherein a virtual environment (10A, 10B, ..., 10n) for a wind turbine (1A, ..., 3n) of the wind park (WP1, WP2, WP3 represents functional elements of a wind turbine (1A, ..., 3n).

3. A control system according to claim 2, wherein a virtual environment (10A, 10B, ..., 10n) of a wind turbine (1A, ..., 3n) comprises one or more of a virtual turbine interface computer (12A), a virtual wind turbine controller (12B), a virtual measurement system (11), and a virtual add-on functional module (17).

4. A control system according to claim 2 or claim 3, wherein the communications means (14, 140) comprises a redundant fibre-optical infrastructure.

5. A control system according to any of the preceding claims, wherein the control system (1) comprises a plurality of virtual instances (10A, 10B, ..., 10n, 11, 12A, 12B, 13, 17) distributed over a plurality of physical locations.

6. A control system according to any of the preceding claims, comprising a remote control centre (100) realised to allow an operator to interact with the remote computing environment (10, 20, 30).

7. A control system according to any of the preceding claims, comprising a plurality of remote computing environments (10, 20, 30), wherein each remote computing environment (10, 20, 30) is allocated to a distinct wind park (WP1, WP2, WP3).

8. A control system according to any of the preceding claims, wherein the remote control centre (100) is realised to interact with each remote computing environment (10, 20, 30).

9. A control system according to any of the preceding claims, wherein a communication means (14, 140) comprises an internet protocol based communication channel (140) between the remote control centre (100) and a remote computing environment (10, 20, 30) and/or between a remote computing environment (10, 20, 30) and a wind turbine (1A, ..., 3n) of a wind park (WP1, WP2, WP3) and/or between a remote computing environment (10, 20, 30) and a substation (16) of a wind park (WP1, WP2, WP3).

10. A remote computing environment (10, 20, 30) configured for controlling a remote wind park (WP1, WP2, WP3) from a location remote from the wind park (WP1, WP2, WP3), which remote computing environment (10, 20, 30) comprises a virtual environment (10A, 10B, ..., 10n) for each wind turbine (1A, ..., 3n) of the wind park (WP1, WP2, WP3) for complete control functionality of the wind turbines (1A, ..., 3n), and a virtual supervisory controller (13) for interacting with a virtual environment (10A, 10B, ..., 10n) of a wind turbine (1A, ..., 3n).

11. A wind turbine (1A, ..., 3n) for use in a wind park (WP1, WP2, WP3) controlled by a control system (1) according to any of claims 1 to 9, wherein the complete control functionality of the wind turbine (1A, ..., 3n) is realised in a remote computing environment (10, 20, 30) of the control system (1), which wind turbine (1A, ..., 3n) comprises a communication means (14, 140) for receiving control signals (18) from the remote computing environment (10, 20, 30) for controlling components of the wind turbine (1A, ..., 3n).

12. A wind turbine (1A, ..., 3n) according to claim 11, wherein a control signal (18) for controlling a component of the wind turbine (1A, ..., 3n) comprises a control signal (18) for controlling any of a generator, a blade pitching arrangement, a yaw control arrangement, a cooling arrangement, a lubrication arrangement.

13. A wind turbine according to claim 11 or claim 12, comprising a number of measurement units (150, 151) for collecting measurement data (19), wherein a measurement unit (150, 151) is realised to transmit measurement data (19) to the remote computing environment (10, 20, 30) of the control system (1).

14. A wind park (WP1, WP2, WP3) comprising a control system (1) according to any of claims 1 to 9, and a plurality of wind turbines (1A, ..., 3n) according to any of claims 11 to 13.

15. A method of controlling a wind park (WP1, WP2, WP3), which method comprises
- providing a virtual environment (10A, 10B, ..., 10n) for wind turbines (1A, ..., 3n) of the wind park (WP1, WP2, WP3) in a remote computing environment (10, 20, 30), which remote computing environment (10, 20, 30) is realised at a location remote from the wind park (WP1, WP2, WP3);
- providing a virtual supervisory controller (13) for interacting with a virtual environment (10A, 10B, ..., 10n) of a wind turbine (1A, ..., 3n);
- monitoring the performance of the wind turbines (1A, ..., 3n) in the remote computing environment (10, 20, 30); and
- generating control signals (18) for the wind turbines (1A, ..., 3n) in the remote computing environment (10, 20, 30); whereby the performance monitoring and control signal generation steps are carried out by an operator at a remote location by means of the virtual supervisory controller (13) and the virtual environments (10A, 10B, ..., 10n) of the wind turbines (1A, ..., 3n).

## Patentansprüche

1. Steuersystem (1) für einen Windpark (WP1, WP2, WP3), wobei der Windpark (WP1, WP2, WP3) eine Anzahl Windenergieanlagen (1A, ..., 3n) zum Erzeugen von elektrischem Strom und ein Umspannwerk (16) zum Einspeisen des elektrischen Stroms in ein Stromnetz umfasst, wobei das Steuersystem (1) Folgendes umfasst:
- eine Datenfernverarbeitungsumgebung (10, 20, 30), die an einem vom Windpark (WP1, WP2, WP3) entfernten Standort umgesetzt ist und eine virtuelle Umgebung (10A, 10B, ..., 10n) für jede Windenergieanlage (1A, ..., 3n) des Windparks (WP1, WP2, WP3) für eine komplette Steuerbarkeit der Windenergieanlagen (1A, ..., 3n) und eine virtuelle Überwachungssteuerung (13) zum Interagieren mit einer virtuellen Umgebung (10A, 10B, ..., 10n) einer Windenergieanlage (1A, ..., 3n) umfasst, und
- ein Kommunikationsmittel (14, 140) für die Kommunikation zwischen einer Bedienperson an einem entfernten Standort und einer Windenergieanlage (1A, ..., 3n) des Windparks (WP1, WP2, WP3) mit Hilfe der virtuellen Überwachungssteuerung (13) und der virtuellen Umgebungen (10A, 10B, ..., 10n) der Windenergieanlagen (1A, ..., 3n).

2. Steuersystem nach Anspruch 1, wobei eine virtuelle Umgebung (10A, 10B, ..., 10n) für eine Windenergieanlage (1A, ..., 3n) des Windparks (WP1, WP2, WP3) Funktionselemente einer Windenergieanlage (1A, ..., 3n) darstellt.

3. Steuersystem nach Anspruch 2, wobei eine virtuelle Umgebung (10A, 10B, ..., 10n) einer Windenergieanlage (1A, ..., 3n) einen virtuellen Energieanlagenschnittstellencomputer (12A), eine virtuelle Windenergieanlagensteuerung (12B), ein virtuelles Messsystem (11) und/oder ein virtuelles Zusatzfunktionsmodul (17) umfasst.

4. Steuersystem nach Anspruch 2 oder 3, wobei das Kommunikationsmittel (14, 140) eine redundante Glasfaserinfrastruktur umfasst.

5. Steuersystem nach einem der vorhergehenden Ansprüche, wobei das Steuersystem (1) mehrere virtuelle Instanzen (10A, 10B, ..., 10n, 11, 12A, 12B, 13, 17) umfasst, die auf mehrere physische Standorte verteilt sind.

6. Steuersystem nach einem der vorhergehenden Ansprüche mit einem Fernsteuerzentrum (100), das so umgesetzt ist, dass eine Bedienperson darüber mit der Datenfernverarbeitungsumgebung (10, 20, 30) interagieren kann.

7. Steuersystem nach einem der vorhergehenden Ansprüche mit mehreren Datenfernverarbeitungsumgebungen (10, 20, 30), wobei jede Datenfernverarbeitungsumgebung (10, 20, 30) einem bestimmten Windpark (WP1, WP2, WP3) zugeordnet ist.

8. Steuersystem nach einem der vorhergehenden Ansprüche, wobei das Fernsteuerzentrum (100) so umgesetzt ist, dass es mit jeder Datenfernverarbeitungsumgebung (10, 20, 30) interagiert.

9. Steuersystem nach einem der vorhergehenden Ansprüche, wobei ein Kommunikationsmittel (14, 140) einen internetprotokollbasierten Kommunikationskanal (140) zwischen dem Fernsteuerzentrum (100) und einer Datenfernverarbeitungsumgebung (10, 20, 30) und/oder zwischen einer Datenfernverarbeitungsumgebung (10, 20, 30) und einer Windenergieanlage (1A, ..., 3n) eines Windparks (WP1, WP2, WP3) und/oder zwischen einer Datenfernverarbeitungsumgebung (10, 20, 30) und einem Umspannwerk (16) eines Windparks (WP1, WP2, WP3) umfasst.

10. Datenfernverarbeitungsumgebung (10, 20, 30) in einer Konfiguration zum Steuern eines entfernten Windparks (WP1, WP2, WP3) von einem vom Windpark (WP1, WP2, WP3) entfernten Standort aus, wobei die Datenfernverarbeitungsumgebung (10, 20, 30) eine virtuelle Umgebung (10A, 10B, ..., 10n) für jede Windenergieanlage (1A, ..., 3n) des Windparks (WP1, WP2, WP3) für eine komplette Steuerbarkeit der Windenergieanlagen (1A, ..., 3n) und eine virtuelle Überwachungssteuerung (13) zum Interagieren mit einer virtuellen Umgebung (10A, 10B, ..., 10n) einer Windenergieanlage (1A, ..., 3n) umfasst.

11. Windenergieanlage (1A, ..., 3n) für den Einsatz in einem von einem Steuersystem (1) nach einem der Ansprüche 1 bis 9 gesteuerten Windpark (WP1, WP2, WP3), wobei die komplette Steuerbarkeit der Windenergieanlage (1A, ..., 3n) in einer Datenfernverarbeitungsumgebung (10, 20, 30) des Steuersystems (1) umgesetzt ist, wobei die Windenergieanlage (1A, ..., 3n) ein Kommunikationsmittel (14, 140) zum Empfangen von Steuersignalen (18) aus der Datenfernverarbeitungsumgebung (10, 20, 30) zum Steuern von Komponenten der Windenergieanlage (1A, ..., 3n) umfasst.

12. Windenergieanlage (1A, ..., 3n) nach Anspruch 11, wobei ein Steuersignal (18) zum Steuern einer Komponente der Windenergieanlage (1A, ..., 3n) ein Steuersignal (18) zum Steuern eines Generators, einer Blatteinstellwinkelanordnung, einer Windrichtungsnachführanordnung, einer Kühlanordnung und/oder einer Schmieranordnung umfasst.

13. Windenergieanlage nach Anspruch 11 oder 12 mit einer Anzahl Messeinheiten (150, 151) zum Sammeln von Messdaten (19), wobei eine Messeinheit (150, 151) zum Übertragen von Messdaten (19) zu der Datenfernverarbeitungsumgebung (10, 20, 30) des Steuersystems (1) umgesetzt ist.

14. Windpark (WP1, WP2, WP3) mit einem Steuersystem (1) nach einem der Ansprüche 1 bis 9 und mehreren Windenergieanlagen (1A, ..., 3n) nach einem der Ansprüche 11 bis 13.

15. Verfahren zum Steuern eines Windparks (WP1, WP2, WP3), das Folgendes umfasst:
- Bereitstellen einer virtuellen Umgebung (10A, 10B, ..., 10n) für Windenergieanlagen (1A, ..., 3n) des Windparks (WP1, WP2, WP3) in einer Datenfernverarbeitungsumgebung (10, 20, 30), wobei die Datenfernverarbeitungsumgebung (10, 20, 30) an einem vom Windpark (WP1, WP2, WP3) entfernten Standort umgesetzt ist,
- Bereitstellen einer virtuellen Überwachungssteuerung (13) zum Interagieren mit einer virtuellen Umgebung (10A, 10B, ..., 10n) einer Windenergieanlage (1A, ..., 3n),
- Überwachen der Leistung der Windenergieanlagen (1A, ..., 3n) in der Datenfernverarbeitungsumgebung (10, 20, 30) und
- Erzeugen von Steuersignalen (18) für die Windenergieanlagen (1A, ..., 3n) in der Datenfernverarbeitungsumgebung (10, 20, 30), wobei die Leistungsüberwachung und die Steuersignalerzeugung von einer Bedienperson an einem entfernten Standort mit Hilfe der virtuellen Überwachungssteuerung (13) und der virtuellen Umgebungen (10A, 10B, ..., 10n) der Windenergieanlagen (1A, ..., 3n) ausgeführt werden.

## Revendications

1. Système (1) de commande pour un parc d'éoliennes (WP1, WP2, WP3), dans lequel le parc d'éoliennes (WP1, WP2, WP3) comprend un certain nombre d'éoliennes (1A, ..., 3n) pour générer une énergie électrique et une sous-station (16) pour alimenter l'énergie électrique dans un réseau, lequel système (1) de commande comprend
- un environnement informatique distant (10, 20, 30), lequel environnement informatique distant (10, 20, 30) est réalisé en un emplacement distant du parc d'éoliennes (WP1, WP2, WP3) et comprend un environnement virtuel (10A, 10B, ..., 10n) pour chaque éolienne (1A, ..., 3n) du parc d'éoliennes (WP1, WP2, WP3) pour une fonctionnalité complète de commande des éoliennes (1A, ..., 3n), et un contrôleur de supervision virtuel (13) pour interagir avec un environnement virtuel (10A, 10B, ..., 10n) d'une éolienne (1A, ..., 3n) ; et
- un moyen (14, 140) de communication pour une communication entre un opérateur en un emplacement distant et une éolienne (1A, ..., 3n) du parc d'éoliennes (WP1, WP2, WP3) au moyen du contrôleur de supervision virtuel (13) et des environnements virtuels (10A, 10B, ..., 10n) des éoliennes (1A, ..., 3n).

2. Système de commande selon la revendication 1, dans lequel un environnement virtuel (10A, 10B, ..., 10n) pour une éolienne (1A, ..., 3n) du parc d'éoliennes (WP1, WP2, WP3) représente des éléments fonctionnels d'une éolienne (1A, ..., 3n).

3. Système de commande selon la revendication 2, dans lequel un environnement virtuel (10A, 10B, ..., 10n) d'une éolienne (1A, ..., 3n) comprend un ou plusieurs d'un ordinateur (12A) d'interface virtuelle d'éolienne, d'un contrôleur (12B) virtuel d'éolienne, d'un système de mesure (11) virtuel et d'un module fonctionnel virtuel d'extensions.

4. Système de commande selon la revendication 2 ou la revendication 3, dans lequel le moyen (14, 140) de communications comprend une infrastructure redondante de fibres optiques.

5. Système de commande selon l'une quelconque des revendications précédentes, dans lequel le système (1) de commande comprend une pluralité d'instances virtuelles (10A, 10B, ..., 10n, 11, 12A, 12B, 13, 17) distribuées sur une pluralité d'emplacements physiques.

6. Système de commande selon l'une quelconque des revendications précédentes, comprenant un centre (100) de commande distant réalisé pour permettre à un opérateur d'interagir avec l'environnement informatique distant (10, 20, 30).

7. Système de commande selon l'une quelconque des revendications précédentes, comprenant une pluralité d'environnements informatiques distants (10, 20, 30), dans lequel chaque environnement informatique distant (10, 20, 30) est affecté à un parc d'éoliennes (WP1, WP2, WP3) distinct.

8. Système de commande selon l'une quelconque des revendications précédentes, dans lequel le centre (100) de commande distant est réalisé pour interagir avec chaque environnement informatique distant (10, 20, 30).

9. Système de commande selon l'une quelconque des revendications précédentes, dans lequel un moyen (14, 140) de communication comprend un canal (140) de communication sous protocole Internet entre le centre (100) de commande distant et un environnement informatique distant (10, 20, 30) et/ou entre un environnement informatique distant (10, 20, 30) et une éolienne (1A, ..., 3n) d'un parc d'éoliennes (WP1, WP2, WP3) et/ou entre un environnement informatique distant (10, 20, 30) et une sous-station (16) d'un parc d'éoliennes (WP1, WP2, WP3).

10. Environnement informatique distant (10, 20, 30) configuré pour commander un parc d'éoliennes (WP1, WP2, WP3) distant d'un emplacement distant du parc d'éoliennes (WP1, WP2, WP3), lequel environnement informatique distant (10, 20, 30) comprend un environnement virtuel (10A, 10B, ..., 10n) pour chaque éolienne (1A, ..., 3n) du parc d'éoliennes (WP1, WP2, WP3) pour une fonctionnalité complète de commande des éoliennes (1A, ..., 3n), et un contrôleur de supervision virtuel (13) pour interagir avec un environnement virtuel (10A, 10B, ..., 10n) d'une éolienne (1A, ..., 3n).

11. Eolienne (1A, ..., 3n) pour une utilisation dans un parc d'éoliennes (WP1, WP2, WP3) commandé par un système (1) de commande selon l'une quelconque des revendications 1 à 9, dans laquelle la fonctionnalité complète de commande de l'éolienne (1A, ..., 3n) est réalisée dans un environnement informatique distant (10, 20, 30) du système (1) de commande, laquelle éolienne (1A, ..., 3n) comprend un moyen (14, 140) de communication pour recevoir des signaux (18) de commande de l'environnement informatique distant (10, 20, 30) pour commander des composants de l'éolienne (1A, ..., 3n).

12. Eolienne (1A, ..., 3n) selon la revendication 11, dans laquelle un signal (18) de commande pour commander un composant de l'éolienne (1A, ..., 3n) comprend un signal (18) de commande pour commander l'un quelconque d'un générateur, d'un agencement de pas de pale, d'un agencement de commande de lacet, d'un agencement de refroidissement, d'un agencement de lubrification.

13. Eolienne selon la revendication 11 ou la revendication 12, comprenant un certain nombre d'unités (150, 151) de mesure pour recueillir des données (19) de mesure, dans laquelle une unité (150, 151) de mesure est réalisée pour transmettre des données (19) de mesure à l'environnement informatique distant (10, 20, 30) du système (1) de commande.

14. Parc d'éoliennes (WP1, WP2, WP3) comprenant un système (1) de commande selon l'une quelconque des revendications 1 à 9, et une pluralité d'éoliennes (1A, ..., 3n) selon l'une quelconque des revendications 11 à 13.

15. Procédé de commande d'un parc d'éoliennes (WP1, WP2, WP3), lequel procédé comprend
- la fourniture d'un environnement virtuel (10A, 10B, ..., 10n) pour des éoliennes (1A, ..., 3n) du parc d'éoliennes (WP1, WP2, WP3) dans un environnement informatique distant (10, 20, 30), lequel environnement informatique distant (10, 20, 30) est réalisé en un emplacement distant du parc d'éoliennes (WP1, WP2, WP3) ;
- la fourniture d'un contrôleur de supervision virtuel (13) pour interagir avec un environnement virtuel (10A, 10B, ..., 10n) d'une éolienne (1A, ..., 3n) ;
- la surveillance de la performance des éoliennes (1A, ..., 3n) dans l'environnement informatique distant (10, 20, 30) ; et
- la génération de signaux (18) de commande pour les éoliennes (1A, ..., 3n) dans l'environnement informatique distant (10, 20, 30) ; d'où il résulte que les étapes de surveillance de performance et de génération de signaux de commande sont mises en oeuvre par un opérateur en un emplacement distant au moyen du contrôleur de supervision virtuel (13) et des environnements virtuels (10A, 10B, ..., 10n) des éoliennes (1A, ..., 3n).
